(19) Europäisches Patentamt
European Patent Office
Office européen des brevets

(11) **EP 4 730 195 A1**

(12) **EUROPEAN PATENT APPLICATION**

(43) Date of publication:
**22.04.2026   Bulletin 2026/17**

(21) Application number: 24207151.2

(22) Date of filing: **17.10.2024**

(51) International Patent Classification (IPC):
**G06K 7/10** (2006.01)     **B65H 75/18** (2006.01)

(52) Cooperative Patent Classification (CPC):
**G06K 7/10346; B65H 75/182**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Università di Pisa**
**56126 Pisa (IT)**

(72) Inventors:
• **MICHEL, Andrea**
  **PISA (IT)**
• **NEPA, Paolo**
  **PISA (IT)**

(74) Representative: **Karaghiosoff, Giorgio Alessandro**
**c/o Praxi Intellectual Property S.p.A. - Savona**
**Via F. Baracca 1R, 4° piano**
**"Il Gabbiano"**
**17100 Savona (IT)**

(54) **DEVICE FOR THE AUTOMATIC IDENTIFICATION OF WINDING DRUMS AND WOUND MATERIALS BY MEANS OF RADIO TAGS**

(57) The invention relates to a device for reading an RFID tag located inside a core around which a winding drum of material is wound. The device comprises an RFID reader coupled to an antenna suitable for transmitting/receiving a radio frequency signal to/from the tag, and a support for the winding drum equipped with at least one hollow shaft designed to insert into the core of the winding drum so as to form an axial extension of said core. The shaft is electromagnetically coupled with the antenna so that an electromagnetic signal from the antenna reaches the tag, and vice versa, propagating inside the shaft and, consequently, inside the core of the winding drum when the shaft is inserted into said core.

Fig. 2

**Description**

The present invention relates to a device for the automatic identification of reels of materials wound around a winding drum through the use of RFID (Radio Frequency Identification) tags applied inside the core of the reels themselves, i.e., the winding drum around which the material is wound. In the tags, not only can the unique identification code of the reel be recorded (written and/or read), but some information related to the production process, such as the remaining material quantity and characteristic material parameters, can also be stored.

The term "reel" generally refers to a set of material wound around a core or winding drum. If not specified, the term includes generically wound materials, such as electrical cables wound on drums, metallic, plastic, or paper sheets on drums or rolls.

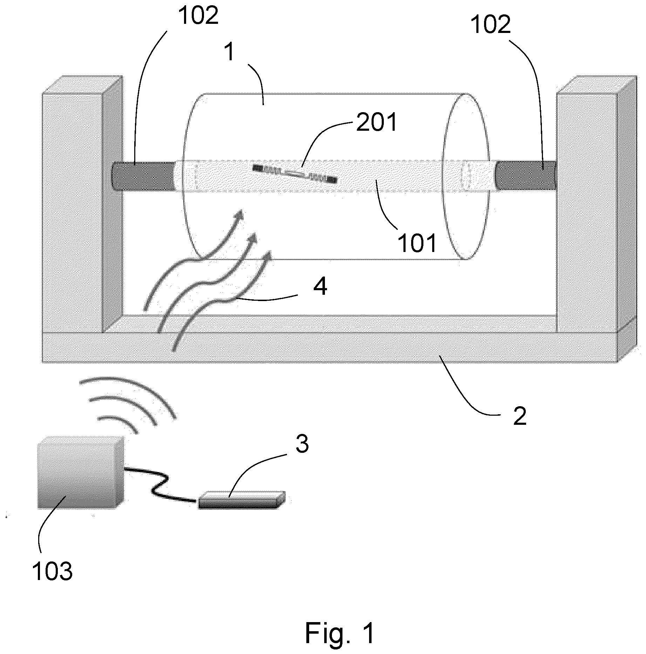

Generally, the reading of RFID tags (201) placed inside the winding drum or core 101 of a reel 1 occurs through a reader antenna 103 positioned outside the reel, at a distance of several tens of centimeters, as schematically shown in Fig. 1.

The figure shows the case of an unwinder (2) with a yoke configuration with axial couplings (102) designed to insert into the core (101) of the reel (1) to be unwound. The reader (3) can read the information present in the sensor (201) only if the electromagnetic signal (4) can pass through the material wound on the reel (1).

In documents US6819243 and US7818088, an RFID reader integrated into forklifts used to transport large paper reels within the warehouses of the paper industry is described. The RFID tag is placed inside the core of the paper reel, while the antennas of the RFID reader are external and integrated into the clamps of the forklifts, allowing automatic identification of the paper reel during its movements.

In the system described in Jussi Nummela, Leena Ukkonen, Lauri Sydänheimo, Markku Kivikoski, "Exploiting Passive UHF RFID in Paper Industry - Case Study: End User", 4th IEEE Conference on Automation Science and Engineering, Washington DC, USA, August 23-26, 2008, the antennas of the reader are instead integrated into an Automated Guided Vehicle (AGV) used to transport paper reels.

In some applications, the need to propagate the electromagnetic signal through the reel can pose a problem for reading the tag. Indeed, the wounded reel can have an outer diameter of over two meters, introducing significant signal attenuation. The material itself could consist of a high percentage of water (e.g., paper in processing), adding further losses during signal propagation. The limiting case is represented by applications where the material wound around the reel contains thin metal films (e.g., the sheets used to make Tetrapak bricks) or is a metal laminate (e.g., aluminum sheets): for these scenarios, the configuration where the radio frequency signal reaches the RFID tag by passing through the reel is inefficient or even unusable.

Purpose of the present invention is to create a device for reading an RFID tag placed inside the core of a reel that overcomes, at least partially, the aforementioned limitations.

The invention achieves this goal with a device comprising an RFID reader coupled to an antenna suitable for transmitting/receiving a radio frequency signal to/from the tag, and a reel support equipped with at least one hollow shaft designed to insert into the core of the reel so as to form an axial extension of said core. The shaft is electromagnetically coupled with the antenna so that an electromagnetic signal coming from the antenna reaches the tag, and vice versa, propagating inside the shaft and, consequently, into the core of the reel when the shaft is inserted into said core.

The insert is advantageously made of conductive material and has a slot designed to couple with the antenna so as to excite at least one mode of electromagnetic signal propagation inside the shaft. The shaft, in practice, acts as a waveguide for the propagation of the electromagnetic signal from the slot to the insertion end in the core of the reel and vice versa.

The support can be of any type, fixed, such as a base with a vertical rod, or mobile, such as the support for the forks of a forklift. In a particularly advantageous implementation, it is an unwinder equipped with a pair of shafts designed to be inserted axially into the opposite sides of the reel core to form a suspension.

The slot can be provided on one or both shafts in correspondence with one or more antennas of one or more readers to ensure maximum flexibility of use.

actually, the RFID tag is interrogated by the reader via an electromagnetic signal that propagates through the reel support, particularly through at least one of the axial inserts of the support, until it reaches the reel core and thus the tag. In this way, the material wound around the reel has a lower influence on the electromagnetic signal's ability to propagate because the signal does not have to pass through the material to reach the tag. The type of material wound around the reel, in practice, only influences the propagation in the section where the electromagnetic signal travels inside the core after exiting the axial shaft. This will be optimal if the core behaves as a waveguide, as in the case of conductive wound material, and suboptimal but still working in other cases, as it is still a very short and unobstructed section.

Further characteristics and improvements are the subject of the dependent claims.

The characteristics of the invention and the advantages deriving from it will become more apparent from the following detailed description of the attached figures, in which:

-    Fig. 1 shows a commonly used communication system for reading an RFID tag placed inside the core of a reel, where the reader antenna is external to the reel.

- Fig. 2 shows the device according to an embodiment of the present invention with the reader antenna integrated into the axial shafts of the reel unwinder, allowing the propagation of the radio frequency signal inside the reel core.

- Fig. 3 shows the electric field distribution (f=866 MHz) radiated by an antenna placed externally to the reel for different material conditions: (a) dry paper without conduction losses, (b) wet paper with a finite conductivity of $2\times10^{-4}$ S/m, and (c) thin aluminum film such as Tetrapak.

- Fig. 4 shows the electric field distribution (f=866 MHz) radiated by an antenna placed at the side of the reel, in correspondence with the internal core, for the same material conditions as the previous figure: (a) dry paper without conduction losses, (b) wet paper with a finite conductivity of $2\times10^{-4}$ S/m, and (c) thin aluminum film such as Tetrapak.

- Fig. 5 shows the behavior of the minimum radii of a cylindrical metal core to allow the propagation of the fundamental mode at various operating frequencies.

- Fig. 6 shows the trends of RSSI (Received Signal Strength Indicator) measured as a function of the distance from the axial shaft for the configuration of the tag in free space and inside the cylinder.

A reel formed from material wound around a core is typically supported in suspension by a pair of rotating axial arms that engage the opposite sides of the core to allow the unwinding of the material from the reel using an unwinder device. The axial arms can also consist of just one, such as in the case of a vertically positioned reel, i.e., with a vertical or substantially vertical axis of rotation, on a support base, for example, during transport by forklift.

The RFID tag inserted into the core of the reel is read by a reader equipped with an antenna capable of transmitting/receiving an electromagnetic signal, typically but not necessarily in the UHF band, to/from the RFID tag.

As already highlighted in the introduction with reference to Fig. 1, in known devices the antenna (103) of the reader (3) is usually arranged to read the electromagnetic signal that propagates through the material forming the core and the reel of material (1).

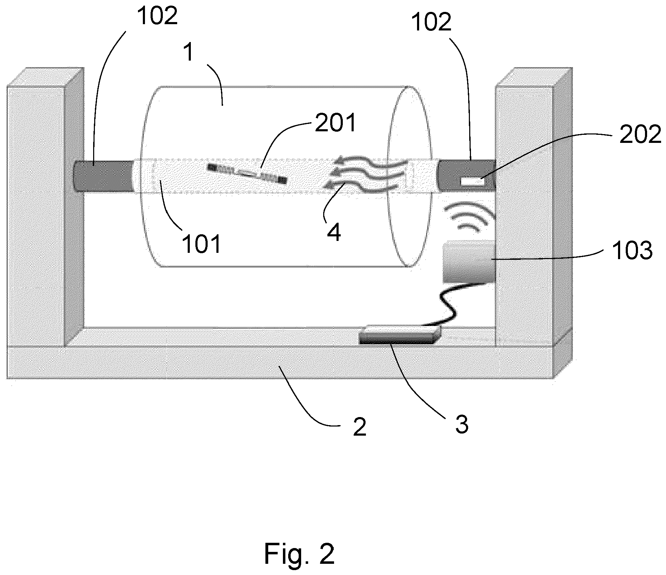

In the configuration of Fig. 2, which schematically illustrates an implementation of the invention, the antenna (103) of the RFID reader (3) is instead integrated directly into the unwinder machine (2) to allow RF signal propagation inside the core (101) .

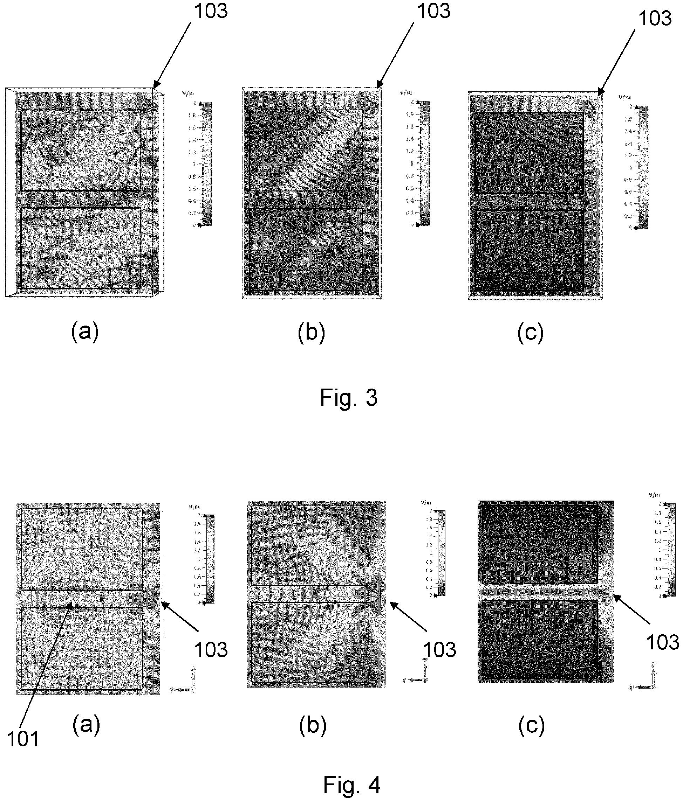

Figs. 3 and 4 compare the electric field distribution (specific implementation using UHF band signals at f=866 MHz) radiated by an antenna (103) placed, respectively, in front (upper right figure) and at the side of a reel at the core entrance for different material conditions: (a) dry paper without conduction losses, (b) wet paper with a finite conductivity of $2\times10^{-4}$ S/m, and (c) thin aluminum film such as Tetrapak.

As can be seen, propagation is certainly better in the second case, regardless of the dielectric characteristics of the material wound around the core. In particular, if the wound material is an electrical conductor, the core acts as a true waveguide for the electric field propagating toward the RFID tag, as shown in Fig. 4c. In this case, propagation through the material wound around the core is completely absent (Fig. 3c) since the conductor has a shielding effect. Even if the wound material is not a conductor, the performance is still better than in the case of known art reading from the outside of the reel.

In one implementation, the antenna (103) of the reader (3) is custom-designed to be integrated into the axial shafts (102) that is into the parts of the unwinders (2) used to mechanically support and rotate the reels. This makes the overall system independent of both the particular material winding the reel (1) and its thickness. Furthermore, by designing a multimodal reader antenna (103) capable of triggering different interrogation signals inside the core (101) of the reel (1), it is possible to ensure adequate performance of the identification system, regardless of the type, position, and orientation of the RFID tag (201) inside the reel (1).

This aspect is important because RFID tags are typically applied directly by the reel manufacturer or by third parties (e.g., distributors), and therefore their selection and installation are not under the control of the production company. Advantageously, the antennas could be integrated into both axial shafts (102) of the unwinder (2) to ensure redundancy during the reading of the RFID tag (201) inside the core (101).

The shaft (102) is advantageously made of conductive material and has a slot (202) designed to couple with the antenna (103) to excite at least one mode of electromagnetic signal propagation inside it. The shaft (102) acts as a waveguide for the electromagnetic signal propagation from the slot (202) to the insertion end in the core (101) of the reel (1) and vice versa.

The slot (202) advantageously has a rectangular shape with dimensions related to the operating band of the reader (3). In this particular embodiment (different other embodiments are possible), let $\lambda$ be the wavelength relative to the fundamental mode that propagates inside the shaft (102), the dimensions of the slot are $0.5\lambda$ by $0.1\lambda$ with tolerances of around 10%.

The axial shaft (102), within which the electromagnetic signal propagates, advantageously has a cylindrical shape with a radius dependent on the operating frequency $f_0$, in particular with a minimum value equal to

$$r_{min} = 2 \times \frac{1.84\,c}{2\pi\,f_0}$$ , where c is the speed of light in air.

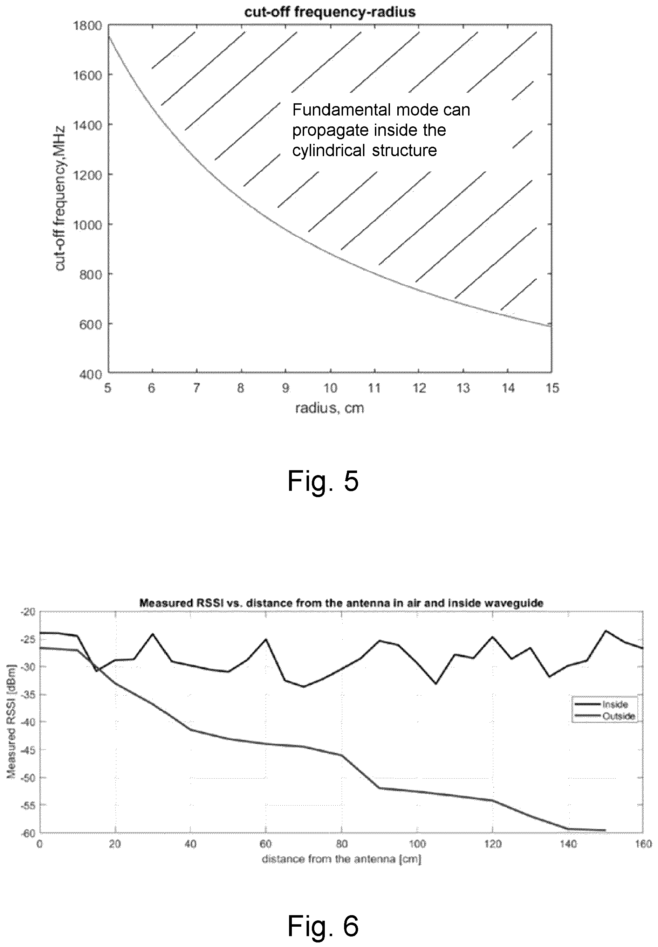

For example, for the UHF RFID band (865-868 MHz), the minimum radius is 10.2 cm. The graph in Fig. 5 shows the minimum radii of a cylindrical metal shaft (102) required for the propagation of the fundamental mode at various operating frequencies.

To evaluate the validity of these declarations, the inventors conducted some theoretical/experimental analyses regarding the detection of a UHF RFID tag placed inside a metallic guiding structure (in particular, a cylindrical tube 2 meters long) based on the teachings of the following documents:

- M. R. Pino, A. Michel, G. A. Narciandi and P. Nepa, "Read-Range Estimation of UHF-RFID Tags Placed Inside Metal Pipes," 2019 13th European Conference on Antennas and Propagation (EuCAP), Krakow, Poland, 2019, pp. 1-5;

- A. Michel, M. R. Pino, G. A. Narciandi and P. Nepa, "Inventory of Piled metal tubes using RFID technology," 2019 URSI Asia-Pacific Radio Science Conference (AP-RASC), New Delhi, India, 2019, pp. 1-3 (doi: 10.23919/URSIAP-RASC.2019.8738251);

- A. Michel, P. Nepa and M. R. Pino, "On RFID Tag Detection Inside Metal Pipes," 2018 IEEE International Symposium on Antennas and Propagation & USNC/URSI National Radio Science Meeting, Boston, MA, 2018, pp. 681-682 (doi: 10.1109/APUSNCURSINRSM.2018.8608589);

- A. Michel, M. R. Pino and P. Nepa, "Detection of UHF RFID Tags in Metallic Guided Structures," 2018 2nd URSI Atlantic Radio Science Meeting (AT-RASC), Meloneras, 2018, pp. 1-3 (doi: 10.23919/URSI-AT-RASC.2018.8471653).

Using commercial RFID readers and tags and standard UHF band antennas, the readability of a tag placed inside the metal tube was verified. The latter behaves as a circular waveguide; therefore, the study of radio frequency signal propagation inside it required a modal analysis to identify the electric and magnetic field distributions affecting the tag.

The optimal shape, size, and position of the slot integrated into the metal cylinder approximating the axial shaft were determined using commercial electromagnetic simulation software.

The metal cylinder is certainly representative of the axial shaft (metallic) used to lift and rotate the paper reel. The propagation inside the reel core, on the other hand, is influenced by the dielectric characteristics of the material from which the reel is made, and in particular by its electrical conductivity, which can depend on the percentage of water contained in the paper or the presence of chemical additives. However, the material characteristics are not always known in advance and can vary from reel to reel.

What can be hypothesized is that the presence of the core and the material wound around the core itself have a guiding effect on the RF signal, even if less efficient than a metallic waveguide. For this reason, system-level measurements were made in terms of RSSI, considering a slotted antenna integrated into the metal cylinder (which approximates an axial shaft) and a UHF RFID tag placed inside a metal cylinder or in free space.

The graph in Fig. 6 shows the trend of RSSI as the distance varies when the slotted antenna integrated into the 50 cm cylinder is powered with a power of 18 dBm. In both cases, the tag was read up to a distance of about 1.5 meters, a sufficient distance to detect an RFID tag inside a paper reel.

If the reel (1) is stationary, the antenna (103) of the RFID reader (3) can be positioned to optimize the propagation between it and the slot (202).

If the reel (1) is moving, as in the case of mounting the device according to the invention on an unwinder (2), some precautions are necessary to ensure optimal operation.

The best propagation occurs when the slot (202) and the radiating/excitation system (103) connected to the RFID reader are aligned.

The simplest way to ensure this is through mechanical alignment. In particular, since the reading of the tag (201) typically occurs when the reel (1) is stationary, the control system of the unwinder (2) can align the slot (202) of the axial shaft (102) with the antenna (103) before definitively stopping the reel (1). This can occur, for example, by using the signal from an encoder coupled to the axial shaft capable of signaling the angular position of the slot during the rotation of the reel to the control unit of the unwinder.

If multiple angularly offset slots are present, a good signal can also be obtained when the antenna is not perfectly aligned with one of them, thus avoiding the need for a controlled reel stopping mechanism.

To trigger the propagation of the fundamental mode inside the guiding structure through the slot, the feed (103) connected to the RFID reader (3) can be a transmission line or a monopole antenna.

In the case of excitation through a transmission line, such as a microstrip, various methods can be followed to ensure optimal device operation, including:

the transmission line feed is connected to a mechanical arm that, when the reel is stationary, moves the feed closer to the slot, at the height of the center of the assumed rectangular slot, also ensuring electrical contact with the metallic axial shaft (ground contact);

the transmission line feed is equipped with sliding contacts with metallic filaments that allow electrical connection of the ground of the transmission line with the metallic cylinder of the axial shaft on which the slot is formed. In this way, electrical contact is ensured even during the rotary movement of the axial shaft, so it is not necessary to move the feed closer to the insert; it is sufficient to stop the reel when the slot is near the feed to ensure automatic alignment.

In the case of excitation via a monopole antenna, the advantage is that the fundamental mode inside the guiding structure can be triggered without the need for electrical contact between the feed and the axial shaft (power supply through electromagnetic coupling). However, the efficiency of this method is lower than in the case of excitation via a transmission line and electrical contact between the grounds, and decreases as the distance between the slot and the transmission line increases. A distance that allows wireless power transfer from the feed into the guiding structure is preferably less than 10 mm, and even more preferably less than 5 mm.

Although the description mainly refers to an application with an unwinder device equipped with a pair of axial shafts supporting the core of a reel, the teachings of the present invention can be applied to any other type of support that allows the propagation of the electromagnetic signal from the reader antenna to the RFID tag through the reel core. It is possible, for example, to foresee the use of a single fixed axial shaft, or a pair of fixed axial shafts, mounted on a fixed or mobile transport platform that acts as a waveguide for the signal coming from the RFID reader antenna. All of this without departing from the guiding principle outlined above and claimed below.

**Claims**

1. Device for reading information stored in an RFID tag (201) located inside a core (101) around which a winding drum (1) for winding material is wound, the device comprising:

    - an RFID reader (3) coupled to an antenna (103) suitable for transmitting/receiving a radio frequency signal to/from the tag (201);
    - a support (2) of the winding drum (1) equipped with at least one hollow shaft (102) designed to insert into the core (101) of the winding drum (1) so as to constitute an axial extension of said core (101);
    **characterized in that** said shaft (102) is electromagnetically coupled with the antenna (103) so that an electromagnetic signal coming from the antenna (103) reaches the tag (201), and vice versa, propagating inside the shaft (102) and, therefore, inside the core (101) of the winding drum (1) when the shaft (102) is inserted into said core (101).

2. Device according to claim 1, wherein the shaft (102) is made of electrically conductive material and has at least one slot (202) designed to couple with the antenna (103) to excite at least one electromagnetic propagation mode of the signal inside the shaft (102), which shaft (102) acts as a waveguide for the electromagnetic signal propagation from the slot (202) to the insertion end in the core (101) of the winding drum (1) and vice versa.

3. Device according to claim 2, wherein the slot (202) has a rectangular shape having predetermined dimensions related to the operating band of the reader (3), and in particular, being λ the wavelength relative to the fundamental propagation mode that propagates inside the insert, the dimensions of the sides of the rectangle being equal to 0.5λ by 0.1λ, ± 10%.

4. Device according to one or more of the preceding claims, wherein the axial shaft (102) within which the electromagnetic signal propagates has a cylindrical shape with a radius defined as a function of the operating frequency $f_0$, in particular, a minimum value equal to $r_{min} = 2 \times \dfrac{1.84\,c}{2\pi\,f_0}$ , where c is the speed of light.

5. Device according to one or more of the preceding claims, wherein the axial shaft (102) has a plurality of slots offset at different angles.

6. Device according to one or more of the preceding claims, wherein the axial shafts (102) are two, designed to be inserted into the opposite ends of the core (101) of the winding drum (1) to allow the winding drum (1) to rotate via an unwinder device equipped with a control unit.

7. Device according to claim 6, comprising a sensor capable of signaling the angular position of the slot (202) relative to a stationary reference during the rotation of the winding drum to the control unit of the unwinder, allowing the rotation to stop when the antenna (103) is aligned with the slot (202) .

8. Device according to one or more of the preceding claims, wherein the antenna (103) comprises a transmission line feed or a monopole antenna.

9. Device according to claim 8, comprising a mechanical arm to support the transmission line feed (103), for example a microstrip, which arm is controlled by the unwinder control unit or another microprocessor or microcontroller unit configured so that, when the winding drum is stationary, the transmission line feed is moved closer to the slot ensuring ground electrical contact with the axial shaft and is optionally retracted just before the reel is set in rotation.

10. Device according to claim 8 or 9, wherein the transmission line feed (103) comprises sliding contacts that allow the electrical connection of the ground of the transmission line feed with the axial shaft (102) on which the slot (202) is formed.

**11.** Device according to claim 8, wherein the antenna (103) comprises a monopole antenna which is placed at a distance from the axial shaft (102) not greater than 10 mm, preferably not greater than 5 mm.

Fig. 1

Fig. 2

Fig. 3

Fig. 4

**Fig. 5**

**Fig. 6**

**EUROPEAN SEARCH REPORT**

Europäisches
Patentamt
European
Patent Office
Office européen
des brevets

**Application Number**

EP 24 20 7151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 694 048 B1 (SICK AG [DE]) 14 April 2021 (2021-04-14) | 1-4,6,8, 10,11 | INV. G06K7/10 |
| A | * paragraphs [0001], [0005], [0034], [0035], [0047] * * figures 1,2,6,7 * | 5,7,9 | B65H75/18 |
| Y | MICHEL ANDREA ET AL: "Electromagnetic Coupler for the Detection of a UHF RFID Tag Inside a Metal Pipe", 2024 IEEE INTERNATIONAL SYMPOSIUM ON ANTENNAS AND PROPAGATION AND INC/USNC-URSI RADIO SCIENCE MEETING (AP-S/INC-USNC-URSI), IEEE, 14 July 2024 (2024-07-14), pages 2709-2710, XP034711458, DOI: 10.1109/AP-S/INC-USNC-URSI52054.2024.10686 303 [retrieved on 2024-09-30] | 1-4,6,8, 10,11 | |
| A | * the whole document * | 5,7,9 | |
| A | JP 2016 121932 A (DAINIPPON PRINTING CO LTD) 7 July 2016 (2016-07-07) * the whole document * | 1-11 | TECHNICAL FIELDS SEARCHED (IPC) G06K B65H |

The present search report has been drawn up for all claims

| Place of search | Date of completion of the search | Examiner |
|---|---|---|
| Munich | 10 March 2025 | Geiger, Hans-Walter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 7151

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2025

| Patent document cited in search report | | Publication date | Patent family member(s) | | Publication date |
|---|---|---|---|---|---|
| EP 3694048 | B1 | 14-04-2021 | DE 102019103102 | A1 | 13-08-2020 |
| | | | DK 3694048 | T3 | 25-05-2021 |
| | | | EP 3694048 | A1 | 12-08-2020 |
| | | | US 2020259238 | A1 | 13-08-2020 |
| JP 2016121932 | A | 07-07-2016 | JP 6398702 | B2 | 03-10-2018 |
| | | | JP 2016121932 | A | 07-07-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6819243 B

- US 7818088 B

**Non-patent literature cited in the description**

- **JUSSI NUMMELA** ; **LEENA UKKONEN** ; **LAURI SYDÄNHEIMO** ; **MARKKU KIVIKOSKI**. Exploiting Passive UHF RFID in Paper Industry - Case Study: End User. *4th IEEE Conference on Automation Science and Engineering, Washington DC, USA, August 23-26, 2008*, 23 August 2008

- **M. R. PINO** ; **A. MICHEL** ; **G. A. NARCIANDI** ; **P. NEPA**. Read-Range Estimation of UHF-RFID Tags Placed Inside Metal Pipes. *2019 13th European Conference on Antennas and Propagation (EuCAP)*, 2019, 1-5

- **A. MICHEL** ; **M. R. PINO** ; **G. A. NARCIANDI** ; **P. NEPA**. Inventory of Piled metal tubes using RFID technology. *2019 URSI Asia-Pacific Radio Science Conference (AP-RASC)*, 1-3

- **A. MICHEL** ; **P. NEPA** ; **M. R. PINO**. On RFID Tag Detection Inside Metal Pipes. *2018 IEEE International Symposium on Antennas and Propagation & USNC/URSI National Radio Science Meeting*, 2018, 681-682

- **A. MICHEL** ; **M. R. PINO** ; **P. NEPA**. Detection of UHF RFID Tags in Metallic Guided Structures. *2018 2nd URSI Atlantic Radio Science Meeting (AT-RASC), Meloneras*, 2018, 1-3